# EUROPEAN PATENT SPECIFICATION

(11) **EP 3 826 758 B1**
(45) Date of publication and mention of the grant of the patent: **13.07.2022**
(21) Application number: 18923607.8
(22) Date of filing: 21.06.2018
(51) Int. Cl.: B07B 1/20, B07B 7/083, B07B 4/08, B09B 3/00

(54) **APPARATUS FOR SEPARATING ORGANICS FROM A CONTAMINATED ORGANICS-INORGANICS WASTE STREAM**
VORRICHTUNG ZUR ABTRENNUNG VON ORGANISCHEN STOFFEN AUS EINEM VERUNREINIGTEN ABFALLSTROM ORGANISCHER UND ANORGANISCHER STOFFE
APPAREIL POUR SÉPARER DES MATIÈRES ORGANIQUES D'UN FLUX DE DÉCHETS ORGANIQUES-INORGANIQUES CONTAMINÉS

(30) Priority: 19.06.2018 US 201815965509
(43) Date of publication of application: 02.06.2021
(73) Proprietor: Vanderbeken, Cedric Jean-Luc, 1050 Ixelles (BE)
(72) Inventor: VANDERBEKEN, Olivier, Hugo, Christopher, Dany, Sudbury, Ontario P3E2R4 (CA); VANDERBEKEN, Marc, Québec G1K3G8 (CA); VANDERBEKEN, Cedric, Jean-Luc, 1050 Ixelles (BE)
(86) International application number: PCT/US2018/038702
(87) International publication number: WO 2019/245557

(56) References cited:
- EP-A1- 1 985 379
- DE-U- 1 882 329
- US-A- 4 440 635
- US-A1- 2011 146 639
- US-A1- 2016 221 040
- US-A1- 2016 221 040
- US-B2- 6 672 461

## Description

Title of the invention: Method and Apparatus for separating organics from a contaminated organics-inorganics waste stream.

This nonprovisional application claims priority based upon the following prior United States Provisional Patent Application entitled: Method and Apparatus for separating organics from a contaminated organics-inorganics waste stream, filed on June 19, 2018 in the USA under publication number US 2018-0369828 A1,

### BACKGROUND OF THE INVENTION

### Field of the Invention

The present invention relates to improvements to a method and apparatus for processing and depackaging waste materials, such as municipal solid waste (MSW) and food waste materials including source-separated organics (SSO), to be treated prior to further processing such as to be transformed into biogas in an anaerobic digester and consequently transformed into renewable fuels, or to be converted into animal feed additives, organic fertilizers or compost.

### Background Information

The disposal of municipal solid waste (MSW) and food-waste materials has become a problem in the entire world. New regulations require organics to be diverted from landfills or ban completely organics from landfill sites, as well as incinerators. But the organic waste streams are often mixed with packaging materials (plastic wrappings, parts of wooden pallets, or long fibrous wrapping materials) or with inorganics and other non-useful waste streams. The plastic and fibrous wrapping materials cause significant operational problems for equipment designed to separate the useful organic fraction from the other waste streams.

Prior art for separating the useful organic fraction from MSW and from food waste are described in representative patents:
USA 4,852,817 (Walter Tipton, Aug.1, 1989)
GB 2354720 A (Ian Houghton, April 4, 2001)
EP 2006 034 B1 (Giuliano Toninelli, 2006)
US 2016/0296986 A1 (Alessandro Massone, 2016)

The apparatus described within these representative patent documents all have severe operational shortcomings that are prevented with the novel improvements described in the following sections.

The document US 2016/0221040 A1 discloses an apparatus suitable for separating organics from a contaminated organics-inorganics waste stream in accordance with the preamble of claims 1 and 2.

### SUMMARY OF THE INVENTION

The present invention has the task of proposing an improved apparatus for the extraction of organics out of a mixed organics-inorganics waste stream or expired pre-packaged food product prior to composting, treatment in an anaerobic digester or transformation into nutrients. This task is achieved by the apparatus in accordance with claim 1 or claim 2.
1. The use of chains to pretreat the incoming waste stream and chop up plastic wrappings or long fibrous materials that plug up existing separation apparatus.
2. The use of closely-spaced square or rectangular openings in the screening drum, which removes the useful organic fraction from the waste stream, as opposed to the conventional use of circular openings. This improvement significantly increases the efficiency and the throughput of the separation process.
3. The use of a tangential discharge at the top of the screening drum, as opposed to a centrally located discharge. This improvement decreases blockage at the discharge to the apparatus and increases capacity.
4. The use of a speed adjustment on the paddle drum in order to adapt the separation process to different feed stocks.

### BRIEF DESCRIPTION OF THE DRAWINGS

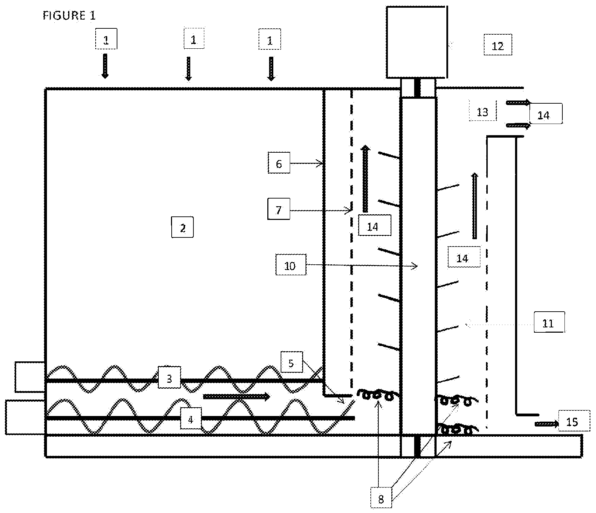

Drawing 1 provides a schematic side view of a device for the extraction of organics out of a mixed organics-inorganics waste stream or expired pre packaged food product. The waste stream (1) is dumped into a feed hopper (2). Two augers (3) & (4) that are located at the bottom of hopper (2) counter-rotate to help prevent waste-stream bridging within hopper (2). Feed auger (4) moves the broken-up waste stream and associated air stream through opening (5) into the bottom of the separation apparatus.

The separation apparatus consists of an outer housing (6) that is cylindrical or rectangular in cross-section, a cylindrical screening drum (7), an inner rotating paddle-drum (10) with a VFD driven motor (12) and a tangential discharge opening (13). Fastened to the exterior of the rotating paddle-drum (10) are 2 or more breakup chains (8), plus a multiplicity of paddles (11).

The waste stream entering through opening (5) into the bottom of the separation apparatus is further broken up by means of rapidly rotating chains (8) and projected against the inside of the stationary drum. The multiplicity of paddles (11) attached to the inner rotating paddle-drum (10) are inclined at an angle and hence act as propellers to thrust the mixture of air and waste solids in an upwards spiral within the annular space between screening drum (7) and inner rotating paddle-drum (10). The upwards spiral, or vortex, comparable to the movement of a twister or waterspout, throws the waste solids radially outwards due to centrifugal forces acting on the solid particles. The smaller, denser organic fraction can pass through the fixed screening drum (7) and settle down in the space between the screening drum (7) and the housing (6), and discharge through opening (15) for further treatment.

The larger, less aerodynamically dense residual waste (waste material 14 i.e. plastic film, wooden fragments, etc.) continue spirally up to the top of the apparatus where they are discharged freely thanks to aerodynamic velocity at discharge opening (13) and hence are expelled out discharge opening (13) from the apparatus.

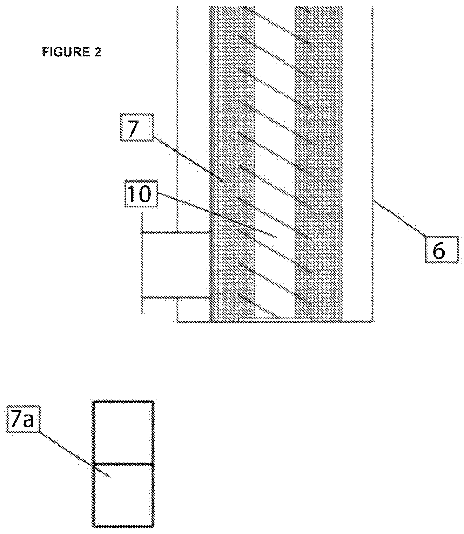

Drawing 2 provides a view of the square or rectangular filtration areas (7a) in the stationary screen (7).

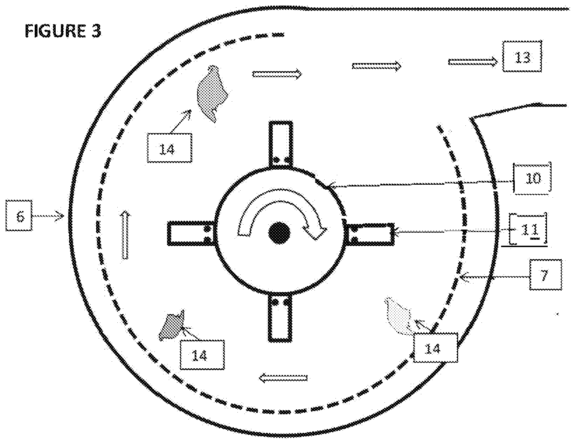

Drawing 3 provides an abbreviated top view of the device for the extraction of organics out of a mixed organics-inorganics waste stream or expired pre-packaged food product. Rotating paddle- drum (10) with a multiplicity of inclined paddles (11) cause entrained air to be blown upwards and hence cause the particles (14) of waste material to spiral upwards towards the discharge (13).

### Detailed description

The apparatus is an improvement to technology known to those involved in the bio-waste reclamation industry and includes a hopper to receive contaminated organic waste from different sources, a vertical separator that separates the inorganics from the organics by creating a vortex effect in a stationary screening drum by which the solid contaminants (paper, plastic, metals) are blown in a spiral fashion similar to a twister or waterspout upwards and removed from the top, while the organic fraction passes through the filtration drum and is removed from the bottom. The apparatus may be complemented by a grit removal system that removes all sand and grit prior to the digester.

A major operational problem with existing apparatus is that the waste stream entering the filtration drum (7) may contain large pieces of plastic wrapping film and or long, fibrous strapping material that eventually wrap themselves around paddles (11) and shaft of the paddle screw and block the apparatus. This blockage requires shutting down the separation process and manually removing the blockage - a labor and time intensive process. It was found by the inventor that this type of fouling and blockage of the paddles can be prevented by attaching 2 or more chains (8) to the outer surface of paddle drum (10) and adjacent to entrance (5). The length of the chains (8) should be longer than the length of the paddles (11). Preferably the links that make up chains (8) should have sharp edges, similar to the chains used on cars and trucks for driving on icy surfaces. The sharp edges help to chop up large pieces of plastic wrapping film and or long, fibrous strapping material but are not essential to this invention, as the primary function of the chains (8) is to throw this large waste material outwards so that it cannot become entangled on paddles (11). The upward movement of the light materials thus starts at the outer position of the vortex and not the center shaft. Hence this invention (in accordance with claim 1, the addition of chains (8) to the bottom of the paddle drum (10)) solves a major operational problem with existing separation technologies, where there can be an accumulation of long fibrous material settling at the bottom of the filtration screen.

Another problem with existing apparatus is with the efficiency for organic fraction separation. The perforated drums of existing apparatus use circular perforations that place a limitation upon the process efficiency. In accordance with claim 2 of the present invention use is made of square or rectangular perforations that provide, in the case of square openings, considerably more open area than do the existing round openings. This increased area allows for greater throughput or, if desired, a better fractionation of the organic waste stream from the otherwaste material. Replacing the perforations with square or rectangular openings will increase the drainage of the liquids and, at the same time, with a rectangular opening with the longitudinal part in the vertical position and the appropriate width, decrease contamination of the separated organics fraction.

An improvement, not in accordance with the invention, which improves the operation of organic waste separation apparatus, is with the location of the discharge (13). Existing systems use discharge and that are located at or near the radial-center of the screening drum (7). Waste material (14) is blown across into the entrance of the tangential discharge opening(13).

An improvement, not in accordance with the invention, is the use of different speeds for the paddle screw driven by a motor(12) with adjustable speeds in function of the different products treated, (SSO, Dry foods, packed vegetables, meats, cans, fruits etc.)

## Claims

1. An apparatus suitable for separating organics from a contaminated organics-inorganics
waste stream comprising a hopper (2) to receive the contaminated organics-inorganics waste stream from different sources, a vertical separator, and a conveyor (4) configured to feed the vertical separator, wherein the vertical separator is contained in a round or rectangular
housing that separates inorganics from the organics by creating a vortex effect within a perforated screening drum (7) by which solid contaminants comprising paper, plastic, and/or metals are blown by air in a spiral pattern upwards and removed from a top of the vertical separator, while the organics are removed from a bottom of the vertical separator, an inner rotating paddle-drum (10) to which a multiplicity of inclined paddles (11) are attached to an external surface thereof creating a twister effect, **characterized in that**
a plurality of chains are configured to rotate and prevent fouling of the paddles, the chains (8) are attached to the external surface of the inner rotating paddle drum (10) and adjacent to entrance of the perforated screening drum (7), wherein a length of the chains (8) is greater than a radial dimension of the paddles (11) but shorter than a radial distance between the inner rotating paddle-drum (10) and the perforated screening drum (7)

2. An apparatus suitable for separating organics from a contaminated organics-inorganics
waste stream comprising a a hopper (2) to receive the contaminated organics-inorganics waste stream from different sources, a vertical separator, and a conveyor (4) configured to feed the vertical separator, wherein the vertical separator is contained in a round or rectangular
housing that separates inorganics from the organics by creating a vortex effect within a perforated screening drum (7) by which solid contaminants comprising paper, plastic, and/or metals are blown by air in a spiral pattern upwards and removed from a top of the vertical separator, while the organics are removed from a bottom of the vertical separator, an inner rotating paddle-drum (10) to which a multiplicity of inclined paddles (11) are attached to an external surface thereof creating a twister effect, wherein the perforations in the perforated screening drum (7) are square or rectangular openings.

3. The apparatus as in claim 1 wherein links of the chains (8) are square in cross-section or otherwise fabricated so as to provide sharp edges that facilitate chopping action and therefore breakup plastic wrappings and long fibrous wrapping material.

## Patentansprüche

1. Eine Vorrichtung zum Trennen von organischen Stoffen aus einem kontaminierten organischen Abfallstrom, der einen vertikalen Separator umfasst, der in einem runden oder rechteckigen Gehäuse enthalten ist, das anorganische Bestandteile von den organischen Stoffen trennt, indem eine Wirbelwirkung innerhalb einer perforierten Siebtrommel (7) erzeugt wird, durch die feste Verunreinigungen, die Papier, Kunststoff und/oder Metalle umfassen, durch Luft in einem spiralförmigen Muster nach oben geblasen und von einer Oberseite des vertikalen Separators entfernt werden, wobei eine Vielzahl von Ketten so konfiguriert sind, dass sie sich drehen und ein Verschmutzen der Paddel verhindern, wobei eine Länge der Ketten (8) grösser ist als eine radiale Abmessung der Schaufeln (11), aber kürzer als ein radialer Abstand zwischen der inneren rotierenden Schaufeltrommel (10) und der perforierten Siebtrommel (7)

2. Eine Vorrichtung zum Trennen von organischen Stoffen aus einem kontaminierten organischen Abfallstrom aus organischen Stoffen, umfassend einen vertikalen Separator, der in einem runden oder rechteckigen Gehäuse enthalten ist, das anorganische Bestandteile von den organischen Stoffen trennt, indem eine Wirbelwirkung innerhalb einer perforierten Siebtrommel (7) erzeugt wird, durch die feste Verunreinigungen, die Papier, Kunststoff und/oder Metalle umfassen, durch Luft in einem spiralförmigen Muster nach oben geblasen und von einer Oberseite des vertikalen Separators entfernt werden, während die organischen Stoffe von einem Boden des vertikalen Separators entfernt werden, wobei eine innere rotierende Paddeltrommel (10), an der eine Vielzahl von geneigten Paddeln (11) angebracht sind, an einer äusseren Oberfläche davon angebracht sind, wodurch ein Twister-Effekt erzeugt wird, wobei Öffnungen in der perforierten Siebtrommel (7) quadratisch oder rechteckig sind.

3. Vorrichtung nach Anspruch 1, **dadurch gekennzeichnet, dass** die Glieder der Ketten (8) im Querschnitt quadratisch oder anderweitig gefertigt sind, um scharfe Kanten zur Verfügung zu stellen, die Häckselwirkung erleichtern und somit Kunststoffumhüllungen und lange Faserwickelmaterialien aufbrechen.

## Revendications

1. L'invention concerne un appareil pour séparer des matières organiques d'un flux de déchets organiques-inorganiques contaminés comprenant un séparateur vertical contenu dans un boîtier rond ou rectangulaire qui sépare des matières organiques des matières organiques par création d'un effet de vortex à l'intérieur d'un tambour de criblage perforé (7) par lequel des contaminants solides comprenant du papier, du plastique et/ou des métaux sont soufflés par de l'air dans un motif en spirale vers le haut et retirés d'une partie supérieure du séparateur vertical, tandis que les matières organiques sont retirées d'un fond du séparateur vertical, un tambour à palettes rotatif interne (10) auquel une pluralité de palettes inclinées (11) sont fixées à une surface externe de celui-ci, créant un effet de torsion, une pluralité de chaînes étant configurées pour tourner et empêcher l'encrassement des palettes, les chaînes (8) étant fixées à la surface externe du tambour à palettes rotatif interne (10) et adjacentes à l'entrée du tambour de criblage perforé (7)

2. Un appareil pour séparer des matières organiques d'un flux de déchets organiques-organiques contaminés comprenant un séparateur vertical contenu dans un boîtier rond ou rectangulaire qui sépare des matières organiques des matières organiques par création d'un effet de vortex à l'intérieur d'un tambour de criblage perforé (7) par lequel des contaminants solides comprenant du papier, du plastique et/ou des métaux sont soufflés par de l'air dans un motif en spirale vers le haut et retirés d'une partie supérieure du séparateur vertical, tandis que les matières organiques sont retirées d'un fond du séparateur vertical, un tambour à palette rotatif interne (10) auquel une pluralité de palettes inclinées (11) sont fixées à une surface externe de celui-ci créant un effet de torsion, des ouvertures dans le tambour de criblage perforé (7) étant carrées ou rectangulaires.

3. L'appareil selon la revendication 1, dans lequel des liaisons des chaînes (8) sont carrées en section transversale ou autrement fabriquées de façon à fournir des bords pointus qui facilitent l'action de hachage et, par conséquent, brise-lames en plastique et matériau d'emballage fibreux long.
